# EUROPÄISCHE PATENTSCHRIFT

(11) **EP 3 756 938 B1**
(45) Veröffentlichungstag und Bekanntmachung des Hinweises auf die Patenterteilung: **12.06.2024**
(21) Anmeldenummer: 19216193.3
(22) Anmeldetag: 13.12.2019
(51) Int. Cl.: B60L 58/18, B60L 58/24, H01M 10/48, H01M 10/613, H01M 10/615, H01M 10/625, H01M 10/6568, H01M 10/6571, H01M 10/663, H01M 10/63

(54) **TEMPERIERUNGSSYSTEM**
TEMPERING SYSTEM
SYSTÈME DE THERMORÉGULATION

(30) Priorität: 13.12.2018 DE 102018132177
(43) Veröffentlichungstag der Anmeldung: 30.12.2020
(73) Patentinhaber: Webasto SE, 82131 Stockdorf (DE)
(72) Erfinder: Binneberg, Peter, 82131 Stockdorf (DE); Jesko, Thomass, 82131 Stockdorf (DE)
(74) Vertreter: Nordmeyer, Philipp Werner

(56) Entgegenhaltungen:
- EP-A1- 3 354 499
- DE-A1-102014 111 517
- DE-A1-102014 204 263
- DE-A1-102014 210 158
- DE-A1-102015 215 253
- US-A1- 2014 227 568
- US-A1- 2016 118 697
- US-A1- 2017 008 419

## Beschreibung

### Technisches Gebiet

Die vorliegende Erfindung betrifft ein Temperierungssystem für eine mindestens zwei separate Batteriepakete aufweisende Fahrzeugbatterie, insbesondere zum Temperieren von Fahrzeugbatterien in über einen Elektromotor elektrisch angetriebenen Personenkraftfahrzeugen oder Nutzfahrzeugen.

### Stand der Technik

Elektrisch angetriebene Fahrzeuge können als rein elektrisch angetriebene Fahrzeuge oder als Hybridfahrzeuge vorliegen. Derartige elektrisch angetriebene Fahrzeuge sind mit einem elektrischen Energiespeicher in Form einer Fahrzeugbatterie ausgestattet, die beispielsweise auch als Traktionsbatterie oder Antriebsbatterie bezeichnet wird. Diese Fahrzeugbatterie speichert die für den Fahrbetrieb notwendige elektrische Energie und stellt diese dem elektrischen Antrieb zur Verfügung.

Für den Aufbau einer Fahrzeugbatterie in einem Elektrofahrzeug ist es bekannt, einzelne Batteriezellen zusammenzuschalten und zu der Fahrzeugbatterie zusammenzubauen. Dazu können einzelne Batteriezellen in Batteriemodulen organisiert sein, welche beispielsweise jeweils 12 Batteriezellen in einer mechanischen Struktur aufnehmen und elektrisch miteinander verschalten. Einige Batteriemodule können miteinander zu einem Batteriepaket organisiert sein, welches jeweils ein Gehäuse aufweist. Beispielsweise können 16 Batteriemodule zu einem Batteriepaket zusammengeschaltet werden und mit einem gemeinsamen Gehäuse versehen sein. Einige oder alle der Batteriepakete bilden dann gemeinsam die Fahrzeugbatterie aus. Die separaten Batteriepakete können an unterschiedlichen Positionen in dem Fahrzeug angeordnet sein, so dass der Bauraum des Fahrzeugs besonders gut ausgenutzt werden kann.

Als Batteriezelle wird im Sinne der vorliegenden Offenbarung eine elektrochemische Speicherzelle, vorzugsweise eine Sekundärzelle, verstanden. Der Begriff "Zelle" kann im Hinblick auf das physikalische Erscheinungsbild der Komponente als kleinste kontaktierbare Baueinheit verstanden werden.

Die Leistung und die entnehmbare Kapazität einer Fahrzeugbatterie, insbesondere bei Verwendung von Lithium-Ionen-Akkumulatoren als Batteriezellen, ist temperaturabhängig. Eine Fahrzeugbatterie kann entsprechend nur in einem bestimmten Einsatztemperaturbereich optimal betrieben werden, zum Beispiel in einem Temperaturbereich zwischen 20 °C und 50 °C. Weisen einzelne Batteriezellen eine Temperatur außerhalb des optimalen Einsatztemperaturbereichs auf, kann dies zu einem Rückgang der Leistungsfähigkeit der Einzelzelle und damit der Fahrzeugbatterie sowie sogar zur Schädigung der einzelnen Batteriezellen führen.

Entsprechend sind bekannte Fahrzeugbatterien mit Temperierungssystemen ausgestattet, die dazu eingerichtet sind, die Batteriezellen bei Temperaturen oberhalb des optimalen Temperaturbereichs zu kühlen.

Aus der US 2017/5375A1 ist beispielsweise ein Kühlsystem bekannt, bei welchem einzelne Batteriepakete einer Fahrzeugbatterie gekühlt werden können. Ein Temperierungssystem für Batterien ist auch aus der US 2014/227568 A1 bekannt.

### Darstellung der Erfindung

Ausgehend von dem bekannten Stand der Technik ist es eine Aufgabe der vorliegenden Erfindung, ein Temperierungssystem für eine mindestens zwei Batteriepaketen aufweisende Fahrzeugbatterie anzugeben, mittels welcher die Leistungsfähigkeit der Fahrzeugbatterie noch weiter verbessert wird.

Diese Aufgabe wird gelöst durch ein Temperierungssystem mit den Merkmalen des Anspruchs 1. Vorteilhafte Weiterbildungen ergeben sich aus den Unteransprüchen, der Beschreibung sowie den beigefügten Zeichnungen.

Entsprechend wird ein Temperierungssystem für eine mindestens zwei separate Batteriepakete aufweisende Fahrzeugbatterie vorgeschlagen. Erfindungsgemäß ist eine zentrale Temperierungseinrichtung vorgesehen, welche dazu ausgebildet und eingerichtet ist, jedes der Batteriepakete individuell zu temperieren.

Dadurch, dass eine zentrale Temperierungseinrichtung vorgesehen ist, welche dazu eingerichtet und ausgebildet ist, jedes der Batteriepakete individuell zu temperieren, kann auch bei unterschiedlichen Einbauorten der einzelnen Batteriepakete bzw. bei unterschiedlichen Leistungsanforderungen an die unterschiedlichen Batteriepakete in dem Fahrzeug dennoch ein besonders effizientes Betreiben der Fahrzeugbatterie erreicht werden.

Insbesondere können auf diese Weise über die zentrale Temperierungseinrichtung die einzelnen Batteriepakete individuell der erforderlichen Temperierung unterzogen werden, um auf diese Weise in allen Batteriepaketen eine möglichst ideale Temperatur bereitzustellen.

Dabei wird unter Temperierung verstanden, dass die Batteriepakete gekühlt und/oder geheizt werden können, um die in den Batteriepaketen aufgenommenen Batteriezellen entsprechend in dem für sie optimalen Temperaturband betreiben zu können und damit die Fahrzeugbatterie als Ganze in einem optimalen Bereich betreiben zu können.

Dabei wird nur eine einzige, zentrale Temperierungseinrichtung verwendet, wodurch es möglich wird, die Komplexität des Systems zu reduzieren und gleichzeitig eine verbesserte Effizienz bereit zu stellen. Weiterhin können Betriebsrisiken beispielsweise aufgrund von Leckagen gegenüber einem verteilten System reduziert werden.

Unter einer mindestens zwei separate Batteriepakete aufweisenden Fahrzeugbatterie wird vorliegend eine solche verstanden, bei welcher mindestens zwei Batteriepakete vorgesehen sind, welche an räumlich voneinander getrennten Orten innerhalb des Fahrzeugs angeordnet sind und welche gemeinsam die Fahrzeugbatterie ausbilden. Jedes Batteriepaket weist ein eigenes Batteriegehäuse auf, mittels dessen das Batteriepaket gegenüber der Umgebung abgeschlossen ist.

Mittels eines solchen Aufbaus einer Fahrzeugbatterie kann eine flexible Raumausnutzung im Fahrzeug vorgesehen sein, da die einzelnen Batteriepakete an unterschiedlichen Einbauorten innerhalb des Fahrzeugs angeordnet sein können. Erst durch eine entsprechende Verschaltung und Kombination der einzelnen Batteriepakete miteinander kann die gewünschte Leistung und Kapazität der Fahrzeugbatterie erreicht werden. Mit anderen Worten wird die Fahrzeugbatterie erst durch die Kombination der Batteriepakete miteinander ausgebildet, ein Einzelbatteriepaket hingegen bildet die Fahrzeugbatterie noch nicht aus.

Durch die individuelle Temperierung der Batteriepakete durch die zentrale Temperierungseinrichtung kann entsprechend eine individuelle Temperierung der einzelnen Batteriepakete gemäß ihrer jeweiligen Temperatur oder Temperaturentwicklung erreicht werden. Die benötigten Wärmekapazitäten in Form einer Kühlkapazität und/oder einer Heizkapazität werden durch die zentrale Temperierungseinrichtung bereitgestellt.

Erfindungsgemäß weist die zentrale Temperierungseinrichtung eine Kühlvorrichtung und eine Heizvorrichtung auf. Entsprechend kann sowohl ein Kühlen als auch ein Heizen der einzelnen Batteriepakete durchgeführt werden. Damit kann die Fahrzeugbatterie bei den unterschiedlichsten Umgebungsbedingungen und den unterschiedlichsten Leistungsanforderungen in einem optimierten Temperaturbereich betrieben werden.

Bevorzugt ist die Temperierungseinrichtung so eingerichtet, dass ein gleichzeitiges Kühlen und Heizen von Batteriepaketen erreicht werden kann. Mit anderen Worten können die Kühlvorrichtung und die Heizvorrichtung gleichzeitig betrieben werden, sodass mindestens eines der Batteriepakete beheizt wird während ein anderes der Batteriepakete gekühlt wird. Damit kann unterschiedlichen Anforderungen beispielsweise beim Betrieb der Fahrzeugbatterie bei niedrigen Temperaturen und hoher Sonneneinstrahlung Rechnung getragen werden. Es kann beispielsweise ein in einem oberen Karosseriebereich, der aufgrund der Sonneneinstrahlung eine hohe Temperatur aufweist, angeordnetes Batteriepaket eine Kühlanforderung haben, wohingegen ein in einem Bodenbereich der Fahrzeugs, quasi im Schatten, angeordnetes Batteriepaket eine Heizanforderung aufweist.

Mit anderen Worten kann eine individuelle Temperierung jedes der Batteriepakete erreicht werden, dahingehend, dass mindestens ein Batteriepaket beheizt wird und gleichzeitig mindestens ein weiteres Batteriepaket gekühlt wird, oder alle Batteriepakete beheizt werden oder alle Batteriepakete gekühlt werden. Beliebige Kombinationen von Heizung und Kühlung sind durch die Ausbildung der Temperierungseinrichtung dahingehend, dass sie sowohl eine Kühlvorrichtung als auch eine Heizvorrichtung aufweist, möglich.

Entsprechend sind die Heizvorrichtung und die Kühlvorrichtung besonders bevorzugt unabhängig voneinander und/oder gleichzeitig betreibbar. Damit kann entsprechend eine Kühlung mindestens eines der Batteriepakete durchgeführt werden, während gleichzeitig ein weiteres der Batteriepakete beheizt wird.

Besonders bevorzugt weist die zentrale Temperierungseinrichtung eine Kühlvorrichtung mit einem CO₂-Kühlkreislauf auf. Auf diese Weise kann eine besonders effiziente und klimaschonende Kühlung innerhalb der Temperierungseinrichtung erreicht werden.

Besonders bevorzugt weist die zentrale Temperierungseinrichtung eine Heizvorrichtung mit einem Hochvoltheizer auf. Auf diese Weise kann ein besonders effektives und schnelles Heizen innerhalb der Temperierungseinrichtung erreicht werden.

Unter einem Hochvoltheizer wird ein elektrisches Heizgerät, insbesondere für Hybrid- und Elektrofahrzeuge, verstanden, welches ein Temperierungsmedium wie beispielsweise Wasser zur Beheizung beispielsweise eines Fahrzeuginnenraums mittels elektrischer Energie erwärmt. Das Heizgerät ist zum Beispiel für Bordnetzspannungen von bis zu 870 Volt ausgelegt, was deutlich über den klassisch bekannten Bordnetzspannungen von 6V, 12V, 24V oder 48V Kraftfahrzeugen liegt. Daraus ergibt sich auch der Begriff Hochvoltheizer.

Anstelle des Hochvoltheizers kann auch eine andere elektrische Heizvorrichtung zum Beheizen des Temperierungsmediums vorgesehen sein.

Erfindungsgemäß weist die zentrale Temperierungseinrichtung einen Kühlkreislauf, in welchem eine Kühlvorrichtung angeordnet ist, und einen Heizkreislauf, in welchem eine Heizvorrichtung angeordnet ist, auf. Über die voneinander separierten Heiz- und Kühlkreisläufe kann entsprechend eine schnelle und effiziente individuelle Temperierung jedes der Batteriepakete erreicht werden. Dabei sind der Kühlkreislauf und der Heizkreislauf individuell mit mindestens einem der separaten Batteriepakete verbindbar. So kann dem jeweiligen Batteriepaket die erforderliche Wärmemenge zugeführt werden oder von diesem jeweils abgeführt werden.

Bevorzugt weist die zentrale Temperierungseinrichtung einen mit der Umgebung in Kommunikation stehenden Wärmetauscher auf. Auf diese Weise kann mittels der zentralen Temperierungseinrichtung eine Temperierung einzelner Batteriepakete auch so betrieben werden, dass mindestens eines der Batteriepakete lediglich durch einen Wärmeaustausch mit der Umgebung temperiert werden kann. Damit kann quasi eine passive Temperierung erreicht werden, die einen weiteren Energieaufwand für die Bereitstellung einer Kühlkapazität oder eine Heizkapazität nicht benötigt.

In einer weiteren Ausgestaltung ist es alternativ oder zusätzlich möglich, einen externen Wärmetauscher oder einen ohnehin im Fahrzeug vorgesehenen Wärmetauscher an die zentrale Temperierungseinrichtung anzuschließen, um auf diese Weise eine effiziente passive Temperierung zu erreichen.

Das Temperierungssystem weist bevorzugt Batteriepakete auf, welche jeweils mindestens einen von einem Temperierungsmedium durchfließbaren Temperierungsmedienkanal aufweist, welcher mit der zentralen Temperierungseinrichtung verbunden ist. Entsprechend kann von der zentralen Temperierungseinrichtung ein entsprechend temperiertes Temperierungsmedium durch die Temperierungsmedienkanäle hindurchgeleitet werden, derart, dass ein effizienter Wärmetransport und ein effizienter Wärmeübertrag von der zentralen Temperierungseinrichtung auf die individuellen Batteriepakete ermöglicht wird.

Bevorzugt ist die zentrale Temperierungseinrichtung zum Angleichen der Temperaturen der separaten Batteriepakete ausgebildet und eingerichtet. Dazu kann es beispielsweise möglich sein, Temperierungsmedium zwischen zwei, mehreren oder allen separaten Batteriepaketen umzuwälzen. Damit kann eine Homogenisierung der Temperatur der Batteriepakete untereinander erreicht werden, so dass eine im Wesentlichen gleiche Temperatur in allen Batteriepaketen erreicht werden kann.

Bevorzugt ist jedem Batteriepaket mindestens ein Mischventil und/oder mindestens eine Umwälzpumpe zugeordnet, über welche jedem Batteriepaket eine individuelle Wärmemenge zugeführt werden kann und bevorzugt eine individuelle Mischung aus dem von dem Heizkreislauf bereitgestellten Temperierungsmedium und dem von dem Kühlkreislauf bereitgestellten Temperierungsmedium zugeführt werden kann. Damit kann eine besonders individuelle Temperierung erreicht werden, bei der eine bestimmte Wärmemenge dem einzelnen Batteriepaket zugeführt werden kann, so dass eine individuelle Temperierung durch die erreichte (Misch-) Temperatur des zugeführten Temperierungsmediums sowie durch die Einstellung des entsprechenden Volumenstroms erreicht werden kann.

Bevorzugt ist eine Steuerung oder Regelung vorgesehen, die dazu ausgebildet und eingerichtet ist, die individuelle Temperierung jedes Batteriepakets zu steuern oder zu regeln, bevorzugt auf eine vorgegebene Temperatur oder einen vorgegeben Temperaturbereich hin.

Die oben gestellte Aufgabe wird auch durch eine Fahrzeugbatterie mit mindestens zwei separaten Batteriepaketen gelöst, welche ein wie vorstehend beschriebenes Temperierungssystem aufweist.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Schaltung eines Temperierungssystems gemäß einem Ausführungsbeispiel; und
- Figur 2: eine schematische Schaltung eines Temperierungssystems gemäß einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

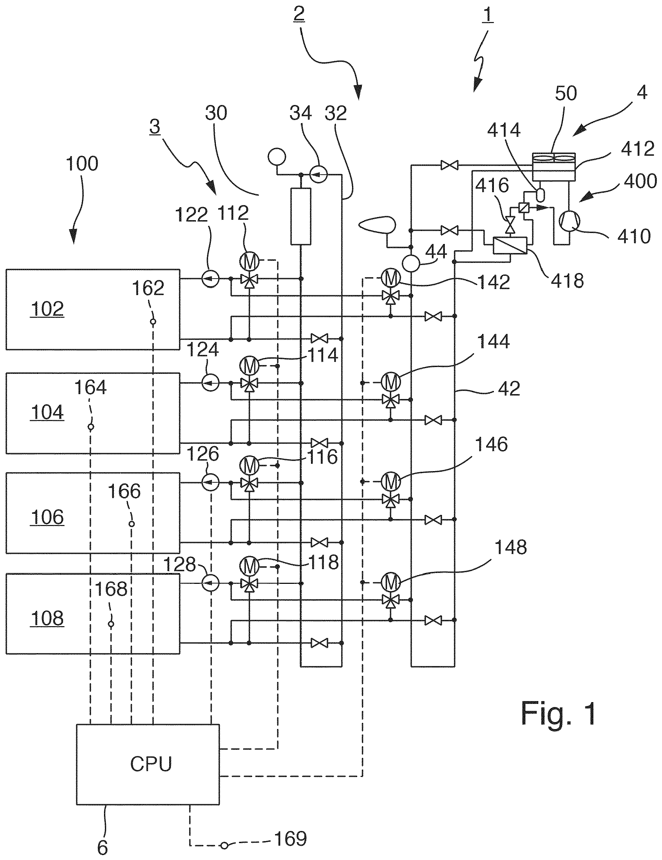

In Figur 1 ist ein Temperierungssystem 1 für eine mindestens zwei separate Batteriepakete 102, 104,106,108 aufweisende Fahrzeugbatterie 100 gezeigt. Die Fahrzeugbatterie 100 ist entsprechend dezentral aufgebaut und die separaten Batteriepakete 102, 104,106,108 können beispielsweise an unterschiedlichen Positionen im Fahrzeug untergebracht sein - beispielsweise eines der Batteriepakete im Unterboden des Fahrzeugs, ein weiteres Batteriepaket im Dachbereich des Fahrzeugs, ein weiteres Batteriepaket in einer Seite des Fahrzeugs etc.

Dazu können einzelne Batteriezellen in Batteriemodulen organisiert sein, welche beispielsweise jeweils 12 Batteriezellen in einer mechanischen Struktur aufnehmen und elektrisch miteinander verschalten. Einige Batteriemodule können miteinander zu einem der gezeigten Batteriepakete 102, 104, 106, 108 organisiert sein, welches jeweils ein eigenes Gehäuse aufweisen. Beispielsweise können 16 Batteriemodule zu einem der Batteriepakete 102, 104, 106, 108 zusammengeschaltet werden. Gemeinsam bilden die Batteriepakete 102, 104, 106, 108 dann gemeinsam die Fahrzeugbatterie 100 aus.

Die Kapazitäten und Dimensionen der separaten Batteriepakete 102, 104,106,108 können gleich oder unterschiedlich sein - beispielsweise abhängig von in dem im Fahrzeug zur Aufnahme der Batteriepakete jeweils verfügbaren Bauraum. Mit anderen Worten kann eines der Batteriepakete 102 - 108 beispielsweise nur zwei Batteriemodule aufnehmen und ein anderes der Batteriepakete 102 - 108 beispielsweise 16 Batteriemodule aufnehmen und noch ein anderes der Batteriepakte beispielsweise 32 Batteriemodule aufnehmen.

Eine zentrale Temperierungseinrichtung 2 ist vorgesehen, mittels welcher jedes der Batteriepakete 102-108 individuell temperiert werden kann.

Unter einer individuellen Temperierung der separaten Batteriepakete 102-108 wird hierin verstanden, dass jedem der separaten Batteriepakete 102-108 eine unterschiedliche Wärmemenge zugeführt werden kann und/oder von jedem der separaten Batteriepakete 102-108 eine unterschiedliche Wärmemenge abgeführt werden kann. Beispielsweise kann einem ersten Batteriepaket 102 eine erste Wärmemenge zugeführt werden, um dieses erste Batteriepaket 102 zu heizen, und einem zweiten Batteriepaket 104 kann eine zweite, sich von der ersten Wärmemenge unterscheidende, Wärmemenge zugeführt werden, um dieses zweite Batteriepaket 104 ebenfalls zu heizen. Weiterhin kann von einem ersten Batteriepaket 102 eine erste Wärmemenge abgeführt werden, um dieses erste Batteriepaket 102 zu kühlen und von einem zweiten Batteriepaket 104 kann eine zweite, sich von der ersten Wärmemenge unterscheidende, Wärmemenge abgeführt werden, um dieses zweite Batteriepaket 104 ebenfalls zu kühlen. Es ist auch möglich, eines der Batteriepakete zu heizen und ein weiteres der Batteriepakete zu kühlen. Damit wird es möglich, in allen Batteriepaketen 102-108, welche ursprünglich beispielsweise unterschiedliche Temperaturen hatten, eine annähernd gleiche Temperatur zu erreichen, unabhängig vom jeweiligen Einbauort, der Kapazität und/oder der aktuellen Belastung des jeweiligen, individuellen Batteriepakets.

Es können in den individuellen Batteriepaketen 102-108 auch unterschiedliche Temperaturen angestrebt werden, wenn beispielsweise unterschiedliche Batteriezellentypen in den individuellen Batteriepaketen verbaut sind.

Die zentrale Temperierungseinrichtung 2 weist hierzu eine Heizvorrichtung 3 auf, welche in dem hier gezeigten Ausführungsbeispiel in Form eines Hochvoltheizers 30 vorgesehen ist. Die Heizvorrichtung 3 kann aber auch in einer anderen bekannten Form bereitgestellt werden und anstelle oder zusätzlich zu einer elektrisch betriebenen Heizvorrichtung auch in Form einer einen Brennstoff verwendenden Heizvorrichtung vorliegen - besonders bei der Anordnung der Fahrzeugbatterie 100 in einem Hybridfahrzeug, in welchem auch ein Verbrennungsmotor mit dem entsprechenden Brennstoff vorgesehen ist. Die Heizvorrichtung 3 der vorliegenden Ausführungsform liegt mit ihrem Hochvoltheizer 30 in einem Heizkreislauf 32, in welchem ein Temperierungsmedium mittels einer Umwälzpumpe 34 umgewälzt werden kann und dabei durch den Hochvoltheizer 30 hindurchgeführt werden kann. Dadurch kann in dem Heizkreislauf 32 ein erwärmtes bzw. beheiztes Temperierungsmedium bereitgestellt werden, welches zur individuellen Temperierung eines, zweier, mehrerer oder aller der Batteriepakete 102-108 verwendet werden kann. Insbesondere kann das in dem Heizkreislauf 32 vorliegende Temperierungsmedium zum Beheizen eines Batteriepakets verwendet werden, um die in dem Batteriepaket vorliegenden Batteriezellen in deren bevorzugten Temperaturbereich zu bringen.

Alternativ oder zusätzlich kann auch die Abwärme aus einem Verbrennungsmotor zum Heizen in der Heizvorrichtung 3 verwendet werden. Dazu kann die Heizvorrichtung 3 einen Wärmetauscher umfassen, über welchen die Abwärme aus dem Verbrennungsmotor in den Heizkreislauf 32 eingebracht werden kann.

Das in dem Heizkreislauf 32 vorliegende Temperierungsmedium kann durch die Schaltung eines entsprechenden Mischventils 112,114, 116, 118 und einer jeweiligen weiteren Umwälzpumpe 122,124,126,128 individuell an eines, zwei, mehrere oder alle der Batteriepakete 102-108 geleitet und gefördert werden, wobei in den Batteriepaketen 102-108 jeweils entsprechende Temperierungsmedienkanäle vorgesehen sind, durch welche hindurch dann das Temperierungsmedium strömen kann, um eine Temperierung der separaten Batteriepakete 102-108 zu erreichen. Das Bereitstellen von Temperierungsmedienkanälen in Batteriegehäusen oder Batteriemodulen ist prinzipiell bekannt, wobei Temperierungsmedienkanäle beispielsweise im Bodenbereich der Batteriegehäuse oder der Batteriemodule angeordnet sein können.

Mit anderen Worten wird es mittels des Heizkreislaufes 32 möglich, das Temperierungsmedium mittels der Umwälzpumpe 34 des Heizkreislaufes 32 umzuwälzen und dabei durch den Hochvoltheizer 30 zu leiten. Das auf diese Weise erwärmte Temperierungsmedium kann dann individuell geschaltet über die jeweiligen Mischventile 112-118 in Kombination mit den nachgeschalteten Umwälzpumpen 122-128 eine individuelle Temperierung der einzelnen Batteriepakete 102-108 durch eine individuelle Versorgung der Batteriepakete 102-108 mit dem Temperierungsmedium erreichen. Dabei kann das durch die individuellen Batteriepakete 102-108 hindurch geleitete Volumen des Temperierungsmediums beispielsweise mittels der jeweiligen Umwälzpumpe 122-128 individuell für jedes Batteriepaket 102-108 so geregelt werden, dass eine entsprechend vorgegebene Erwärmung des jeweiligen Batteriepakets erreicht werden kann.

Die zentrale Temperierungseinrichtung 2 weist weiterhin eine Kühlvorrichtung 4 auf, welche in dem gezeigten Ausführungsbeispiel einen CO₂-Kühlkreislauf 400 umfasst, welcher einen Verdichter 410, einen Gaskühler 412, einen Sammler/Trockner 414, ein Expansionsventil 416 sowie einen Plattenverdampfer 418 aufweist. Es kann auch ein nicht in den Figuren gezeigter Zwischenwärmetauscher zwischen dem Sammler/Trockner414 und dem Expansionsventil 416 vorgesehen sein.

Mittels des COz-Kühlkreislaufs 400 kann eine Kältemenge bereitgestellt werden, die an einen Kühlkreislauf 42, in dem ein Temperierungsmedium vorliegt, übergeben werden kann.

Der Kühlkreislauf 42 wird mittels einer Umwälzpumpe 44 umgewälzt und das Temperierungsmedium kann entsprechend über die Kopplung des COz-Kühlkreislaufs 400 über dessen Plattenverdampfer 418 mit dem Kühlkreislauf 42 mit der Kältemenge beaufschlagt werden.

Entsprechend kann durch ein Umwälzen des Temperierungsmediums in dem Kühlkreislauf 42 durch die Umwälzpumpe 44 das sich in dem Kühlkreislauf 42 befindliche Temperierungsmedium abgekühlt werden und dann den individuellen Batteriepaketen 102-108 zum individuellen Temperieren und insbesondere zum individuellen Kühlen zugeführt werden.

Hierbei kann - analog zum Vorgehen bei dem Heizkreislauf 32 - über ein entsprechendes Schalten eines Mischventils 142,144,146, 148 und den individuellen Betrieb der Umwälzpumpen 122 - 128 ein jeweils individuelles Volumen an gekühltem Temperierungsmedium aus dem Kühlkreislauf 42 durch die Temperierungsmedienkanäle des jeweiligen individuellen Batteriepakets 102-108 geleitet werden, um entsprechend eine individuelle Temperierung zu erreichen.

Entsprechend kann, je nach Schaltung der Mischventile 112-118 für den Wärmekreislauf 32 beziehungsweise der Mischventile 142-148 für den Kühlkreislauf 42 entweder eines, zwei, mehrere oder alle der Batteriepakete 102-108 entweder von einem gekühlten Temperierungsmedium oder von einem erwärmten Temperierungsmedium durchflossen werden. Entsprechend kann eine individuelle Temperierung der einzelnen Batteriepakete 102-108 durch eine einzige, zentrale Temperierungseinrichtung 2 erreicht werden.

In einer besonders einfachen Ausgestaltung sind die Mischventile 112-118 und die Mischventile 142-148 in Form einfacher Mehrwegeventile vorgesehen, so dass durch eine Schaltung des jeweiligen Mischventils 112-118 beziehungsweise 142-148 das zugehörige Batteriepaket 102-108 entsprechend entweder mit dem Heizkreislauf 32 oder mit dem Kühlkreislauf 42 verbunden sein kann. Dies ist individuell für jedes der Batteriepakete 102-108 möglich, so dass beispielsweise ein Batteriepaket 104 über sein zugeordnetes Mischventil 144 mit dem Kühlkreislauf 42 verbunden ist und ein weiteres Batteriepaket 108 gleichzeitig über sein zugeordnetes Mischventil 118 mit dem Heizkreislauf 32 verbunden ist. Es können natürlich auch gleichzeitig alle Batteriepakete 102-108 mit dem Heizkreislauf 32 oder alle mit dem Kühlkreislauf 42 verbunden sein.

Durch eine entsprechende Schaltung der jeweiligen Mischventile 112 - 118 des Heizkreislaufs 32 sowie der gleichzeitigen Schaltung der Mischventile 142 - 148 des Kühlkreislaufs 42 kann auch eine individuelle Mischtemperatur aus dem Temperierungsmedium aus dem Heizkreislauf 32 und dem Temperierungsmedium aus dem Kühlkreislauf 42 beim Zuführen des Temperierungsmediums zu den einzelnen Batteriepaketen 102-108 erreicht werden, um eine entsprechende individuelle Temperierung zu erreichen.

Durch einen individuellen Betrieb der Umwälzpumpen 122 - 128 der einzelnen Batteriepakete 102-108 kann die dem jeweiligen Batteriepaket 102-108 zugeführte oder von diesem abgeführte Wärmemenge eingestellt werden. Wird ein hoher Volumenstrom des Temperierungsmediums zugeführt, so kann eine größere Wärmemenge zugeführt oder abgeführt werden, als es dies bei einem relativ geringeren Volumenstrom der Fall wäre.

Damit kann eine Steuerung oder Regelung 6, welche über Temperatursensoren 162 - 168 in den jeweiligen Batteriepaketen 102- 108 die vorliegende Temperatur bestimmen kann, die Zufuhr des Temperierungsmediums aus dem Heizkreislauf 32 und/oder aus dem Kühlkreislauf 42 über eine entsprechende Schaltung der Mischventile 112-118 und 142-148 sowie eine entsprechende Schaltung der Umwälzpumpen 122-128 regeln oder steuern. Dabei wird durch die Steuerung oder Regelung der Zufuhr oder Abfuhr einer entsprechenden Wärmemenge durch das Temperierungsmedium eine gewünschte Temperatur beziehungsweise ein gewünschter Temperaturbereich in den Batteriepaketen 102-108 gehalten oder weitgehend erreicht.

Die Steuerung oder Regelung 6 zumindest die Mischventile 112 - 118 und 142 - 148 sowie die Umwälzpumpen 122 - 128 entsprechend individuell so setzen, dass eine individuelle Zuführung eines individuell temperierten Temperierungsmediums zu den einzelnen Batteriepaketen 102 - 108 ermöglicht wird.

Weiterhin ist es möglich, mittels der Umwälzpumpen 122-128 und einer entsprechenden Schaltung der Mischventile 112-118 sowie der Mischventile 142-148 das Temperierungsmedium lediglich zwischen den einzelnen Batteriepaketen 102-108 umwälzen, um auf diese Weise eine Homogenisierung der Temperaturen der Batteriepakete 102 bis 108 zu erreichen. Mit anderen Worten wird in diesem Betriebsmodus eine von außen aufgebrachte Temperierung des Temperierungsmediums nicht verwendet, sondern es werden die in den individuellen Batteriepaketen vorliegenden Wärmemengen aneinander angeglichen.

Die zentrale Temperierungseinrichtung 2 weist weiterhin einen passiven Wärmetauscher 50 auf, welcher beispielsweise in Form eines Wärmetauschers mit einem Lüfter vorgesehen ist, mittels welchem das Temperierungsmedium mit der Umgebungstemperatur in Wechselwirkung gesetzt werden kann. Damit wird es ermöglicht, einen Temperaturaustausch zwischen einzelnen, zweien, mehreren oder allen der individuellen Batteriepakete 102-108 der Fahrzeugbatterie 100 mit der Umgebung zu erreichen.

Der Wärmetauscher kann auch alternativ oder zusätzlich als externer Wärmetauscher oder als ohnehin im Fahrzeug vorgesehener Wärmetauscher vorliegen und an die zentrale Temperierungseinrichtung angeschlossen sein, um auf diese Weise eine effiziente passive Temperierung zu erreichen.

Entsprechend kann eine individuelle Temperierung eines, zweier, mehrerer oder aller der individuellen Batteriepakete 102-108 der Fahrzeugbatterie 100 über die zentrale Temperierungseinrichtung 2 erreicht werden, wobei eine individuelle Beheizung bzw. eine individuelle Kühlung genauso erreicht werden kann, wie eine Homogenisierung der einzelnen Temperaturen der individuellen Batteriepakete 102-108 untereinander bzw. eine passive Temperierung gegenüber der Umgebungstemperatur erreicht werden kann.

Entsprechend ist eine flexible und effiziente Temperierung der einzelnen Batteriepakete der Fahrzeugbatterie 100 möglich, was zu einem noch effizienteren Betreiben der Fahrzeugbatterie 100 bei unterschiedlichen Umgebungsbedingungen und unterschiedlichen Betriebsbedingungen führen kann.

Beispielsweise kann bei besonders hohen Außentemperaturen eine Kühlung aller Batteriepakete 102-108 notwendig sein. Bei milden Umgebungstemperaturen kann lediglich eine passive und damit besonders energieeffiziente Temperierung möglich sein. Bei besonders niedrigen Außentemperaturen kann eine Heizung individueller bzw. aller Batteriepakete der Fahrzeugbatterie 100 notwendig sein. Beispielsweise kann aber auch ein Erwärmen von mindestens einem der Batteriepakete und ein zum gleichen Zeitpunkt stattfindendes Kühlen eines anderen der Batteriepakete durchgeführt werden. Dies kann beispielsweise bei generell kalten Umgebungsbedingungen und einer hohen Sonneneinstrahlung auf einige der Batteriepakete notwendig sein.

Die Steuerung oder Regelung 6 kann auch mit einem entsprechenden Außentemperatursensor 169 versehen sein, mittels dessen eine Vorhersage über die benötigten Temperierungsleistungen für die individuellen Batteriepakete 102 - 108 getroffen werden kann.

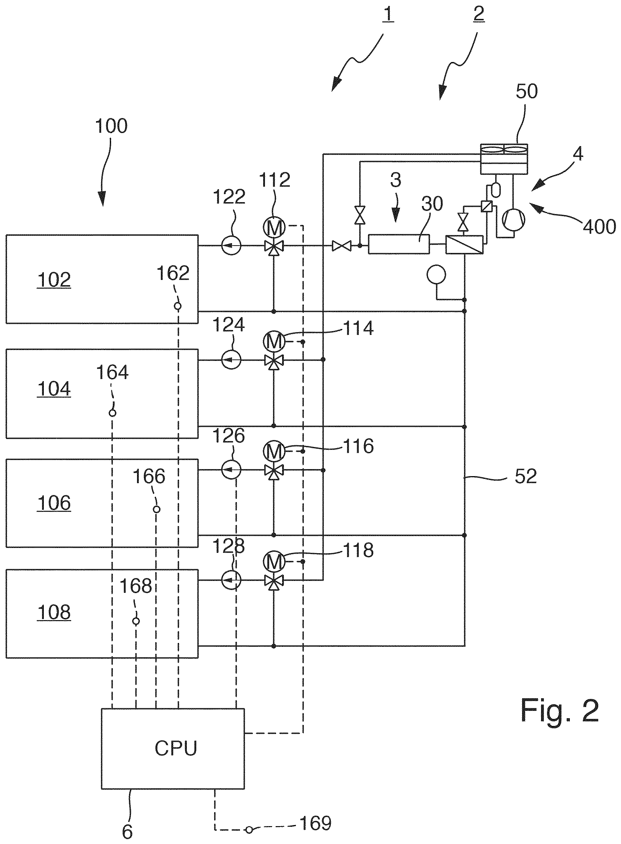

In Figur 2 ist eine vereinfachte Ausführungsform des in Figur 1 gezeigten Temperierungssystems 1 gezeigt.

Es ist wiederum eine Fahrzeugbatterie 100, welche aus individuellen Batteriepaketen 102 - 108 besteht, vorgesehen. Das Temperierungssystem 1 umfasst wiederum eine zentrale Temperierungseinrichtung 2, welche eine Heizvorrichtung 3 in Form eines Hochvoltheizers 30 sowie eine Kühlvorrichtung 4 in Form eines COz-Kühlkreislaufs 400 umfasst. Weiterhin ist auch ein passiver Wärmetauscher 50 vorgesehen.

Der Aufbau des COz-Kühlkreislaufs 400 entspricht dem, welcher schon zu Figur 1 exemplarisch beschrieben wurde.

Im Unterschied zu dem in Figur 1 gezeigten Ausführungsbeispiel sind jedoch keine separaten Kühl-und Heizkreisläufe vorgesehen, sondern die Heizvorrichtung 3 und die Kühlvorrichtung 4 wirken auf den gleichen Temperierungsmedienkreislauf52, sodass mittels der zentralen Temperierungseinrichtung 2 entweder ein Erwärmen eines, zweier, mehrerer oder aller der separaten Batteriepakete 102-108 durchgeführt werden kann, oder aber ein Kühlen eines, zweier, mehrerer oder aller der Batteriepakete 102-108 erreicht werden kann. Eine Erwärmung mindestens eines der Batteriepakete 102-108 und eine gleichzeitige Kühlung mindestens eines anderen der Batteriepakete 102-108 kann in dieser Ausführungsform durch das Temperierungsmedium nicht erreicht werden.

Dennoch kann durch die Verwendung der zentralen Temperierungseinrichtung 2 ein individuelles Temperieren der jeweiligen, separaten Batteriepakete 102-108 darüber erreicht werden, dass die individuellen Umwälzpumpen 122 - 128 gemeinsam mit der gleichzeitigen Schaltung der Mischventile 112-118 eine individuelle Temperierungsmedienzufuhr zu jedem individuellen Batteriepaket 102-108 so erreichen können, dass eine individuelles Temperieren eines jeden Batteriepakets erreicht werden kann.

Die Anforderung der jeweiligen Temperierungsleistung zum Erwärmen bzw. zum Kühlen der individuellen Batteriepakete 102-108 kann beispielsweise von einem Batteriemanagementsystem aus durchgeführt werden. Damit kann individuell in jedem der Batteriepakete 102-108 eine entsprechende, die Leistung der Fahrzeugbatterie 100 insgesamt optimierende, Temperatur erreicht werden.

Unter einem Batteriemanagementsystem wird eine zentrale oder dezentrale Steuereinrichtung verstanden, mittels welcher Lade- und Entladeströme eines Batteriesystems in Abhängigkeiten von technischen und physikalischen Parametern einzelner Batteriezellen, -module oder -pakete gesteuert werden können.

Auch in diesem Ausführungsbeispiel kann eine individuelle Temperierung der Batteriepakete 102 - 108 mittels einer Steuerung oder Regelung 6 gesteuert oder geregelt werden, wobei die Steuerung oder Regelung 6 sowohl über Temperatursensoren 162 - 168 Informationen über den aktuellen Temperaturzustand der jeweiligen Batteriepakete 102-108 als auch Informationen zur Umgebungstemperatur über einen Außentemperatursensor 169 erhält.

Die Steuerung oder Regelung 6 kann dann so auf die Mischventile 112 - 128 und Umwälzpumpen 122 - 128 steuernd oder regelnd eingreifen, dass in jedem der Batteriemodule 102- 108 die gewünschte Temperatur beziehungsweise ein innerhalb eines vorgegebenen Temperaturbereichs liegende Temperatur erreicht wird.

### Bezugszeichenliste

- 1: Temperierungssystem
- 100: Fahrzeugbatterie
- 102 - 108: Batteriepaket
- 112 - 118: Mischventil
- 122 - 128: Umwälzpumpe
- 142 - 148: Mischventil
- 162 - 168: Temperatursensor
- 169: Außentemperatursensor
- 2: zentrale Temperierungseinrichtung
- 3: Heizvorrichtung
- 30: Hochvoltheizer
- 32: Heizkreislauf
- 34: Umwälzpumpe
- 4: Kühlvorrichtung
- 42: Kühlkreislauf
- 44: Umwälzpumpe
- 400: COz-Kühlkreislauf
- 410: Verdichter
- 412: Gaskühler
- 414: Sammler/Trockner
- 416: Expansionsventil
- 418: Plattenverdampfer
- 50: Wärmetauscher/Lüfter
- 52: Temperierungsmedienkreislauf
- 6: Steuerung oder Regelung

## Patentansprüche

1. Temperierungssystem (1) für eine mindestens zwei separate Batteriepakete (102,104,106,108) aufweisende Fahrzeugbatterie (100),
**gekennzeichnet durch**
eine zentrale Temperierungseinrichtung (2), welche dazu ausgebildet und eingerichtet ist, jedes der Batteriepakete (102, 104, 106, 108) individuell zu temperieren, wobei die zentrale Temperierungseinrichtung (2) einen Kühlkreislauf (42), in welchem eine Kühlvorrichtung (4) angeordnet ist, und einen Heizkreislauf (32), in welchem eine Heizvorrichtung (3) angeordnet ist, aufweist, wobei der Kühlkreislauf (42) und der Heizkreislauf (32) individuell mit mindestens einem der separaten Batteriepakete (102, 104, 106, 108) verbindbar sind.

2. Temperierungssystem (1) gemäß Anspruch 1, **dadurch gekennzeichnet, dass** die Heizvorrichtung (3) und die Kühlvorrichtung (4) unabhängig voneinander und/oder gleichzeitig betreibbar sind.

3. Temperierungssystem (1) gemäß Anspruch 1 oder 2, **dadurch gekennzeichnet, dass** die zentrale Temperierungseinrichtung (2) eine Kühlvorrichtung (4) mit einem CO₂-Kühlkreislauf (400) aufweist.

4. Temperierungssystem (1) gemäß einem der vorstehenden Ansprüche, **dadurch gekennzeichnet, dass** die zentrale Temperierungseinrichtung (2) eine Heizvorrichtung (3) mit einem Hochvoltheizer (30) aufweist.

5. Temperierungssystem (1) gemäß einem der vorstehenden Ansprüche, **dadurch gekennzeichnet, dass** jedem Batteriepaket (102, 104, 106, 108) mindestens ein Mischventil (112, 114, 116, 118, 142, 144, 146, 148) und/oder mindestens eine Umwälzpumpe (122, 124, 126, 128) zugeordnet ist, über welche jedem Batteriepaket (102, 104, 106, 108) eine individuelle Wärmemenge zugeführt werden kann und bevorzugt eine individuelle Mischung aus dem von dem Heizkreislauf (32) bereitgestellten Temperierungsmedium und dem von dem Kühlkreislauf (42) bereitgestellten Temperierungsmedium zugeführt werden kann.

6. Temperierungssystem (1) gemäß einem der vorstehenden Ansprüche, **dadurch gekennzeichnet, dass** eine Steuerung oder Regelung (6) vorgesehen ist, die dazu ausgebildet und eingerichtet ist, die individuelle Temperierung jedes Batteriepakets (102, 104, 106, 108) zu steuern oder zu regeln, bevorzugt auf eine vorgegebene Temperatur oder einen vorgegebenen Temperaturbereich hin.

7. Temperierungssystem (1) gemäß einem der vorstehenden Ansprüche, **dadurch gekennzeichnet, dass** die zentrale Temperierungseinrichtung (2) einen mit der Umgebung in Kommunikation stehenden Wärmetauscher (50) aufweist.

8. Temperierungssystem (1) gemäß einem der vorstehenden Ansprüche, **dadurch gekennzeichnet, dass** die zentrale Temperierungseinrichtung (2) zum Angleichen der Temperaturen der separaten Batteriepakete (102, 104, 106, 108) ausgebildet und eingerichtet ist.

9. Fahrzeugbatterie (100) mit mindestens zwei separaten Batteriepaketen (102, 104, 106, 108), **dadurch gekennzeichnet, dass** ein Temperierungssystem (1) gemäß einem der vorstehenden Ansprüche vorgesehen ist.

## Claims

1. A temperature control system (1) for a vehicle battery (100) comprising at least two separate battery packs (102, 104, 106, 108),
**characterised by**
a central temperature control device (2) which is designed and configured to individually control the temperature of each of the battery packs (102, 104, 106, 108), wherein the central temperature control device (2) has a cooling circuit (42), in which a cooling device (4) is arranged, and a heating circuit (32), in which a heating device (3) is arranged, wherein the cooling circuit (42) and the heating circuit (32) are individually connectable to at least one of the separate battery packs (102, 104, 106, 108).

2. The temperature control system (1) according to claim 1, **characterised in that** the heating device (3) and the cooling device (4) are operable independently of one another and/or are operable simultaneously.

3. The temperature control system (1) according to claim 1 or 2, **characterised in that** the central temperature control device (2) has a cooling device (4) with a CO2 cooling circuit (400).

4. The temperature control system (1) according to one of the preceding claims, **characterised in that** the central temperature control device (2) has a heating device (3) with a high-voltage heater (30).

5. The temperature control system (1) according to one of the preceding claims, **characterised in that** at least one mixing valve (112, 114, 116, 118, 142, 144, 146, 148) and/or at least one circulation pump (122, 124, 126, 128) is associated with each battery pack (102, 104, 106, 108), via which an individual quantity of heat can be supplied to each battery pack (102, 104, 106, 108) and preferably via which an individual mixture of the temperature control medium provided by the heating circuit (32) and the temperature control medium provided by the cooling circuit (42) can be supplied.

6. The temperature control system (1) according to one of the preceding claims, **characterised in that** a control or regulation device (6) is provided which is designed and configured to control or adjust the individual temperature control of each battery pack (102, 104, 106, 108), preferably to a predetermined temperature or a predetermined temperature range.

7. The temperature control system (1) according to one of the preceding claims, **characterised in that** the central temperature control device (2) has a heat exchanger (50) in communication with the surroundings.

8. The temperature control system (1) according to one of the preceding claims, **characterised in that** the central temperature control device (2) is configured and arranged to equalise the temperatures of the separate battery packs (102, 104, 106, 108).

9. A vehicle battery (100) with at least two separate battery packs (102, 104, 106, 108), **characterised in that** a temperature control system (1) according to one of the preceding claims is provided.

## Revendications

1. Système de régulation de température (1) pour une batterie de véhicule (100) présentant au moins deux paquets de batteries séparés (102, 104, 106, 108),
**caractérisé par**
un dispositif central de mise en température (2), qui est conçu et agencé pour mettre en température individuellement chacun des paquets de batteries (102, 104, 106, 108), le dispositif central de mise en température (2) présentant un circuit de refroidissement (42), dans lequel est disposé un dispositif de refroidissement (4), et un circuit de chauffage (32), dans lequel est disposé un dispositif de chauffage (3), le circuit de refroidissement (42) et le circuit de chauffage (32) pouvant être reliés individuellement à au moins un des paquets de batteries séparés (102, 104, 106, 108).

2. Système de régulation de température (1) selon la revendication 1, **caractérisé en ce que** le dispositif de chauffage (3) et le dispositif de refroidissement (4) peuvent être exploités indépendamment l'un de l'autre et/ou simultanément.

3. Système de régulation de température (1) selon la revendication 1 ou 2, **caractérisé en ce que** le dispositif central de régulation de température (2) présente un dispositif de refroidissement (4) avec un circuit de refroidissement de CO2 (400).

4. Système de régulation de température (1) selon l'une des revendications précédentes, **caractérisé en ce que** le dispositif central de régulation de température (2) présente un dispositif de chauffage (3) avec un réchauffeur à haute tension (30).

5. Système de régulation de température (1) selon l'une des revendications précédentes, **caractérisé en ce qu'**à chaque pack de batteries (102, 104, 106, 108) est associée au moins une vanne de mélange (112, 114, 116, 118, 142, 144, 146, 148) et/ou au moins une pompe de circulation (122, 124, 126, 128), par l'intermédiaire de laquelle une quantité de chaleur individuelle peut être amenée à chaque pack de batteries (102, 104, 106, 108) et de préférence un mélange individuel peut être amené à partir du fluide de mise en température mis à disposition par le circuit de chauffage (32) et du fluide de mise en température mis à disposition par le circuit de refroidissement (42).

6. Système de régulation de température (1) selon l'une des revendications précédentes, **caractérisé en ce qu'**il est prévu une commande ou une régulation (6) qui est conçue et agencée pour commander ou réguler la régulation de température individuelle de chaque bloc de batteries (102, 104, 106, 108), de préférence en fonction d'une température ou d'une plage de températures prédéfinie.

7. Système de régulation de température (1) selon l'une des revendications précédentes, **caractérisé en ce que** le dispositif central de régulation de température (2) comporte un échangeur de chaleur (50) en communication avec l'environnement.

8. Système de régulation de température (1) selon l'une des revendications précédentes, **caractérisé en ce que** le dispositif central de régulation de température (2) est conçu et agencé pour égaliser les températures des paquets de batteries séparés (102, 104, 106, 108).

9. Batterie de véhicule (100) avec au moins deux paquets de batterie séparés (102, 104, 106, 108), **caractérisée en ce qu'**un système de régulation de température (1) selon l'une des revendications précédentes est prévu.
